(19) **Europäisches Patentamt**

**European Patent Office**

**Office européen des brevets**

(11) **EP 0 858 984 A1**

(12) **EUROPEAN PATENT APPLICATION**
published in accordance with Art. 158(3) EPC

(43) Date of publication:
**19.08.1998 Bulletin 1998/34**

(21) Application number: **97915489.5**

(22) Date of filing: **01.04.1997**

(51) Int. Cl.[6]: **C04B 41/53**, C09K 13/08

(86) International application number:
**PCT/ES97/00082**

(87) International publication number:
**WO 97/49649 (31.12.1997 Gazette 1997/57)**

(84) Designated Contracting States:
**AT BE CH DE DK FR GB GR IE IT LI NL PT SE**

(30) Priority: **25.06.1996 ES 9601422**

(71) Applicants:
• **The Solid Step Company S.L.**
  **28036 Madrid (ES)**

• **Lozano Coco, Julio A.**
  **28036 Madrid (ES)**

(72) Inventor: **LOZANO COCO, Julio A.**
  **E-28036 Madrid (ES)**

(74) Representative:
  **Lahidalga de Careaga, Jose Luis**
  **Goya, 143**
  **28009 Madrid (ES)**

(54) **METHOD FOR IMPROVING THE ADHERENCE ON MINERAL SURFACES WHICH CONTAIN SILICON**

(57)     The method comprises (a) impregnating a mineral surface which contains silicon, such as a ceramic paving, with a composition comprising an aqueous solution of fluorhydric acid (0.5-6%) and a fluorinated nonionic surfactant (0.01-0.1%), and (b) washing the treated surface with water. With this method it is possible to form regularly distributed microscopic concavities in the treated surface, thereby improving the wet adherence of said surfaces which, therefore, do not become slippery. This method is useful to obtain non-slipping pavings and floorings.

## Description

### FIELD OF THE INVENTION

The invention refers, in general, to a method for the treatment of siliceous surfaces and, in particular, to a method for improving the adherence of surfaces of a mineral nature containing silicon comprising the use of a composition based on fluorhydric acid and a non-ionic, fluorinated surfactant, which through a reaction with the said siliceous surface, changes the physical characteristics of the same in such a way that, when wet, its adherence increases and prevents slipping on the said surface.

### BACKGROUND OF THE INVENTION

Concern for the quality of life is increasingly evident in society, embracing very diverse aspects, from issues relating to the environment to minor domestic accidents which might subsequently give rise to important health, or even legal, disputes. Within the latter group, there is a growing awareness of the possibility of injury due to accidental falls caused by slipping, chiefly when wet surfaces are involved. When someone slips and falls, problems may arise that go beyond simple embarrassment at being observed falling over. Bones may be broken and costs incurred, not only for necessary medical treatment but also through absence from work of the person affected; sometimes legal action may result; and one should not forget the possible health problems that may arise if recovery is not complete.

Falls caused by slipping are one of the main causes of legal actions in industry and in society in general. There are many places where such a situation may be brought about throughout the day in the daily life of a person. For example, in bathrooms, gymnasium changing rooms, swimming pools, open air terraces, closed areas with wet floors from cleaning, wet roads, pavements and paths, etc. The great majority of these are public places and the people who frequent them have confidence in being able to walk safely and therefore demand compensation from the authorities when they suffer injury due to neglect on the part of the owner, manager or architect of a building.

In general terms, non-slipping pavements are characterised by the presence of concavities in their surface which act as suckers and provide a corresponding adherence. These concavities may be of very different shape and depth depending on the method used to produce them and may, in some cases be considered as micropores. It is thought that the more concavities per $cm^2$ and the more homogeneously they are distributed throughout the surface, the greater will be the adherence obtained. Consequently, it is desirable that they should have a regular shape and the smallest possible size.

The processes used to obtain the non-slipping property may be purely physical, such as mechanical abrasion, or chemical, such as lixiviation. The former have the drawback that they usually completely spoil the treated surface, causing a significant aesthetic change and, in some cases, diminishing its physical properties. The latter are also inapplicable to all types of paving, since their composition must fulfil a series of requirements depending on the chemical reagent used. The most commonly used reagent is fluorhydric acid (FH), which in accordance with the reaction

$$4\ HF + SiO2 \rightarrow SiF4 + 2H2O$$

reacts with the silica that forms part of the paving and causes silicon tetrafluoride gas (SiF4) to be given off, which gives rise to the formation of microscopic concavities.

Regarding the specific case of ceramic paving, the aim is to achieve non-slipping surfaces by using enamels that provide a high degree of roughness, usually produced by the use of abrasive materials such as corundum. The concavities obtained are large and very irregular in shape, which makes it very difficult to obtain satisfactory results. Moreover, this method restricts the great aesthetic possibilities of ceramic pavings to very limited designs and surface appearances, with the added drawback of roughness to the touch, which can sometimes cause scratches from a fall and even the accumulation of bacteria and cleaning problems.

From the points considered up to now, it is clear that there is a problem in the social sphere that directly affects the properties of paving, to which, in general terms, a completely satisfactory solution has not been provided and, in particular, has not been provided in the case of ceramic pavings. As regards the latter, solutions have been put forward in the form of very restricted models of design and appearance. This results in a low opinion of their use in some places, and sometimes they do not even achieve the desired benefits.

Consequently, there still exists the need for a method to improve adherence in surfaces of a mineral nature which contain silica, such as ceramic pavings, which overcome the above-mentioned drawbacks associated with the large size and the irregularity of concavities obtained with existing methods of treating siliceous surfaces. The present invention provides a solution to said existing need which also do not restrain the multiple aesthetic posibilities of ceramic pavings.

## DETAILED DESCRIPTION OF THE INVENTION

The invention provides a method for treating siliceous surfaces and, in particular, a method for improving the adherence of surfaces of a mineral nature containing silicon, such as surfaces of ceramic paving, comprising the use of a composition based on fluorhydric acid and a non-ionic, fluorinated surfactant, which through a reaction with the said siliceous surface, changes the physical characteristics of the same in such a way that, when wet, its adherence increases and prevents slipping on the said surface.

The method provided by this invention for improving adherence in surfaces of a mineral nature containing silicon, such as surfaces of ceramic paving, comprises the following stages:

a) impregnate the said surface with a composition comprising an aqueous solution of fluorhydric acid, with a concentration of between 0.5% and 6%, which contains a non-ionic, fluorinated surfactant at a concentration of between 0.01% and 0.1%, in relation to the total composition; and

b) wash the treated surface with water to eliminate a possible surplus of solution which has not reacted.

The commercially available fluorinated alkyl polyoxyethylenethanols may be used as non-ionic, fluorinated surfactants.

The compositions used for carrying out the method that is the subject of this invention may be prepared by adding the appropriate amount of non-ionic, fluorinated surfactant to the aqueous solution of FH.

To measure slip resistance in treated pieces, one of the different methods described below was followed. Also, for the evaluation of the results obtained, simple visual inspection was used to assess a possible deterioration in appearance.

Measurement of slip resistance

Among the numerous systems proposed for undertaking the evaluation of slip resistance, the following should be mentioned:

a) Inclined plane (German standard DIN 51 097), which consists of a barefooted person ascending and descending an inclined plane covered with the paving to be analysed. The plane's inclination is adjustable and the paving must be flooded at all times with water containing a product that reduces surface tension.

b) Static friction coefficient (American standard C-1028-84), which is used to measure the force required for a determinate weight to begin to move upon the surface to be evaluated. The area of contact between the weight and the surface must be made of rubber with specific characteristics.

c) Tortus, which involves a device for measuring the dynamic friction coefficient registered by the force that opposes the movement of a constant vertical load; and

d) TRRL Pendulum (standard NLT-175/88), which also allows the dynamic friction coefficient to be measured by registering the energy loss of a pendulum of known characteristics when the edge of the shoe rubs against the surface to be tested.

There is no general international criterion, but rather different countries have opted for one method or another, so that nowadays there are different standards with national scope.

Some of these systems have been developed specifically for paving for use by pedestrians, while others have been adapted from outside this area. The results obtained depend upon the method used, so that the same paving may be considered slipping or non-slipping according to the system of evaluation. Even with the same method, different results may be obtained depending on the equipment and materials used. It must also be taken into account that many of these methods require surfaces of considerable size to be able to carry out the measurement, which makes it unfeasible to develop them in the laboratory, where often the available surface does not exceed 100 cm$^2$.

Therefore, in view of the confusion that exists in the measurement of slip-resistance, and in order to acquire greater information, it was decided to evaluate this property by determining the static friction coefficient and/or by using the inclined plane method, according to the needs of each case.

To measure the static friction coefficient, a laboratory method was perfected which, although it does not conform to any standard, allows a comparative classification to be established among the different cases studied. The method is based on the above-mentioned American standard C-1028-84, in which the load applied has been modified by adapting it to the pressure exerted by a person of 70 Kg at the moment slipping may occur, taking into account that at that moment only part of the foot is supported by the paving. The geometry of the contact area between the load and the paving tile was also modified, giving it a circular shape that more closely resembles the foot at the moment of support than the quadrangular shape proposed by the norm. A digital dynamometer was used to register the force required to move a load of 0.5 Kg/cm$^2$ placed upon the surface to be tested. The contact area between the load and the paving tile is circular in shape and is covered with a material representative of approximately 90% of shoe soles. The tests were carried out with the surface to be tested in a wet condition. In each case ten measurements were taken and their average given as the result. Prior to carrying out any test, slipping on a test tile was measured in order to ensure the repeatability of the method.

As regards the measurements taken by means of the inclined plane system, a ramp with an inclination of 24° was deployed. The paving to be tested was placed on this ramp and wetted with water which contained a detergent, after which a barefooted person walked up and down the ramp. This method was used in cases in which several pieces of the paving to be tested were available, and as a definitive proof that the desired property had been obtained.

Also, to determine the variation in slip-resistance with wear due to abrasion, a PEI-type device was used with the abrasive load indicated in standard ENI 54. Different degrees of abrasion were applied and the slip-resistance was measured after each stage using the "static friction coefficient" method.

The tests carried out by impregnating ceramic paving with the different anti-slip preparations described above demonstrated that a reaction is produced with the surface of such paving which alters its physical characteristics, increasing its slip-resistance and, therefore, increasing its adherence when wet and preventing slipping on the said paving. In general, it was observed that treatment of different paving with the said preparations produces a uniform attack upon the treated paving and the formation of microscopic concavities uniformly distributed over the said paving, which provides treated surfaces with non-slipping properties. Moreover, these studies demonstrated the versatility of this method and the possibility of adapting the preparation to the type of paving to be treated and the type of enamel to he used. Consequently, the method provided by this invention is suitable for the treatment of surfaces of a mineral nature which contain silicon, for example ceramic paving, in order to improve the adherence of the same.

The following examples serve to illustrate the invention.

**EXAMPLE 1**

Preparation of non-slipping compositions

Different compositions were prepared based on FH and a non-ionic, fluorinated surfactant by adding, at room temperature and with stirring, different amounts of the same in aqueous solution to different aqueous solutions of HF with concentrations of between 0.5% and 6%, until surfactant concentrations were reached in the FH aqueous solution of between 0.01% and 0.1% in relation to the total preparation.

**EXAMPLE 2**

Impregnation of ceramic paving surfaces

2.1. Preliminary tests

In order to have initial information concerning the effect produced by treatment with the preparations obtained in Example 1 upon ceramic paving, ten commercial models were chosen with different surface finishes, which were representative of the different products currently manufactured in the sector. They were treated by impregnation with the reactive preparation and slip-resistance was measured in the pieces obtained using the "inclined plane" method described above. Change in appearance was evaluated by visual inspection.

It was observed that in all cases the desired property was obtained (slip-resistance or increased adhesiveness), but five of the pavings underwent a quite significant deterioration in appearance, which demonstrated the importance of the enamel preparation for obtaining satisfactory results and the need to develop new enamel preparations which will tolerate the treatment without being affected aesthetically.

2.2. Tests with new enamels

On the basis of the information obtained in the above-mentioned tests (Example 2.1), new enamels were developed with which five newly created models were prepared.

The pieces obtained were treated according to the process described in the foregoing section and the "inclined plane" method was used to confirm whether adequate slip-resistance had been achieved. In none of the cases a variation was observed in the surface appearance of the paving, indicating that the enamel had the correct formulation to avoid being affected by the treatment.

To quantify the increase in slip-resistance, this property was measured using the "static friction coefficient" method on treated and untreated surfaces. Table 1 shows the results obtained in each case, as well as the increase in slip-resistance expressed as a percentage. It can be observed that in all paving samples slip-resistance increases very significantly after application of the treatment, even reaching improvements of 157%.

TABLE 1

| Slip-resistance<br>Slip resistance in different pavings | | | | | |
|---|---|---|---|---|---|
| | 1 | 2 | 3 | 4 | 5 |
| D | 1.85 | 2.42 | 2.17 | 1.64 | 1.31 |
| ND | 3.26 | 4.69 | 3.40 | 4.22 | 2.60 |
| % | 76 | 94 | 57 | 157 | 98 |
| D: Slipping<br>ND: Non-slipping<br>%: Percentage increase | | | | | |

2.3. Variation in slip-resistance with wear due to abrasion.

From the paving samples tested in Example 2.2. above, the two which had yielded the best results (Numbers 4 and 5) were selected to carry out a study of the variation in slip-resistance with wear due to abrasion.

Following the process described in the section concerning the measurement of slip-resistance, this property was measured using the "static friction coefficient" method in different stages of abrasion up to a total of 1,500 passes, both in treated and in untreated paving. The results obtained for the two types of paving studied are shown in Table II. The data conform to curves of the following type:

$$y = \frac{1}{(A + Bx + Cx2)}$$

wherein,

"y" represents slip-resistance, and
"x" represents the number of passes applied in each stage of abrasion.

As may be observed, in both cases slip-resistance is maintained throughout the different stages of abrasion, always with significantly higher values when the paving has been treated with the anti-slip preparation. These results indicate that once the non-slipping property has been obtained, it lasts over time even though the paving undergoes significant wear.

TABLE II

| Variation in slip-resistance with wear due to abrasion.<br>Static friction coefficient method. | | | | | | | | | | | |
|---|---|---|---|---|---|---|---|---|---|---|---|
| Paving | | No. of Passes | | | | | | | | | |
| | | 0 | 25 | 50 | 75 | 100 | 150 | 200 | 500 | 1000 | 1500 |
| 4 | ND | 4.22 | 3.96 | 4.05 | 4.38 | 4.77 | 4.19 | 4.27 | 4.58 | 4.91 | 4.52 |
| 4 | D | 1.64 | 2.04 | 1.42 | 1.73 | 1.75 | 1.52 | 2.12 | 2.1 | 2.37 | 2.8 |
| 5 | ND | 2.60 | 2.02 | 2.71 | 2.94 | 3.72 | 2.99 | 3.08 | 3.69 | 3.86 | 3.71 |
| 5 | D | 1.31 | 1.30 | 1.07 | 1.31 | 1.29 | 1.43 | 1.70 | 2.02 | 1.84 | 2.70 |
| (ND: Non-slipping;<br>D: Slipping) | | | | | | | | | | | |

**Claims**

1. A method for improving the adherence of surfaces of a mineral nature containing silicon, which includes the use of a preparation based on fluorhydric acid and a non-ionic, fluorinated surfactant.

2. A method for improving the adherence of surfaces of a mineral nature containing silicon, in accordance with the first claim, comprising the following stages:

   a) impregnate the said surface of a mineral nature containing silica with a preparation consisting of an aqueous solution of fluorhydric acid, with a concentration of between 0.5% and 6%, which contains a non-ionic, fluorinated surfactant at a concentration of between 0.01% and 0.1%, in relation to the total preparation, and
   b) wash the treated surface with water to eliminate a possible surplus of solution which has not reacted.

3. A method for improving the adherence of surfaces of a mineral nature containing silicon, in accordance with the first claim, in which the said non-ionic, fluorinated surfactant is an alkyl fluorinated polyoxyethylenethanol.

4. A method for improving the adherence of surfaces of a mineral nature containing silicon, in accordance with the first claim, in which the said surface of a mineral nature containing silicon is ceramic paving.

# INTERNATIONAL SEARCH REPORT

| International application No. |
|---|
| PCT/ES 97/00082 |

## A. CLASSIFICATION OF SUBJECT MATTER

IPC[6] : C04B 41/53, C09K 13/08

According to International Patent Classification (IPC) or to both national classification and IPC

## B. FIELDS SEARCHED

Minimum documentation searched (classification system followed by classification symbols)

IPC[6] : C04B  C09K  C03C  E01C

Documentation searched other than minimum documentation to the extent that such documents are included in the fields searched

Electronic data base consulted during the international search (name of data base and, where practicable, search terms used)

## C. DOCUMENTS CONSIDERED TO BE RELEVANT

| Category* | Citation of document, with indication, where appropriate, of the relevant passages | Relevant to claim No. |
|---|---|---|
| Y | GB 117221 A (SLIP-PRUF SERVICE CORP.) 19 June 1968 (19.06.68), Page 1, line 7-11; Page 1, line 27-36; Claims 1, 7; Page 4, line 7 | 1,2,4 |
| Y | US 4055458 A (H. NIEDERPRÜM ET AL.) 25 October 1977 (25.10.77), Column 1, line 36-44; Column 3, line 18-40; Column 5, line 51-54 | 1,2,4 |
| A | | 3 |
| A | US 3847688 A (L.O. GILLICE) 12 November 1974 (12.11.74), Claims 1,4 | 1-4 |
| A | DATABASE WPI Week 9536 Derwent Publications Ltd., London, GB; AN 95-272781 & JP 07172956 A (M. KASHIWA ET AL.) Abstract | 1-4 |
| A | US 4795582 A (T. OHMI ET AL) 3 January 1989 (03.01.89), Column 4, line 24-29; table I | |

| X | Further documents are listed in the continuation of Box C. | | X | See patent family annex. |

\* Special categories of cited documents:

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| 17 July 1997 (17.07.97) | 23 July 1997 (23.07.97) |

| Name and mailing address of the ISA/ | Authorized officer |
|---|---|
| S.P.T.O. Facsimile No. | Telephone No. |

Form PCT/ISA/210 (second sheet) (July 1992)

## INTERNATIONAL SEARCH REPORT

| International application No. |
|---|
| PCT/ES 97/00082 |

**C (Continuation). DOCUMENTS CONSIDERED TO BE RELEVANT**

| Category* | Citation of document, with indication, where appropriate, of the relevant passages | Relevant to claim No. |
|---|---|---|
| A | PROCEEDINGS OF THE 39TH ANNUAL FREQUENCY SYMPOSIUM, May. 1985 PHILADELPHIA PENNSYLVANIA, Pages 276-281, R.J. BRANDMAYR ET AL.: "Chemical polishing in etching solutions that contain surfactants" Page 276, line 38-43; Page 277, column left, line 42-51; table I | |
| A | EP 0278628 A (OLIN CORPORATION) 17 August 1988 (17.08.88), Claims 1,3 | |